Europäisches Patentamt

European Patent Office

Office européen des brevets

(11) Veröffentlichungsnummer: **0 376 378**
**A2**

(12) **EUROPÄISCHE PATENTANMELDUNG**

(21) Anmeldenummer: **89203228.5**

(22) Anmeldetag: **18.12.89**

(51) Int. Cl.⁵· **G02B 6/38**

(30) Priorität: **24.12.88 DE 3843946**

(43) Veröffentlichungstag der Anmeldung:
**04.07.90 Patentblatt 90/27**

(84) Benannte Vertragsstaaten:
**DE ES FR GB IT**

(71) Anmelder: **Philips Patentverwaltung GmbH**
**Wendenstrasse 35 Postfach 10 51 49**
**D-2000 Hamburg 1(DE)**

㉔ **DE**

Anmelder: **N.V. Philips' Gloeilampenfabrieken**
**Groenewoudseweg 1**
**NL-5621 BA Eindhoven(NL)**

㉔ **ES FR GB IT**

(72) Erfinder: **Serapins, Klaus**
**Steinbrecherweg 27**
**D-5060 Bergisch Gladbach 1(DE)**
Erfinder: **Jostes, Karl-Theo**
**v. Diergardt-Strasse 54**
**D-5090 Leverkusen 1(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Einen LWL koaxial aufnehmender Steckerstift und Verfahren zu seiner Herstellung.**

㉗ Die Erfindung betrifft einen LWL koaxial aufnehmenden Steckerstift, welcher aus einem harten Grundmaterial mit niedrigem thermischen Ausdehnungskoeffizienten besteht. Eine genaue Bearbeitung der Mantelfläche des Steckerstifts wird dadurch problemlos möglich, daß seine äußere Mantelfläche zumindest auf einer Teillänge mit einer Beschichtung einer Dicke von weniger als 300 um, insbesondere weniger als 150 um, aus einem besser als das Grundmaterial spanabhebend bearbeitbaren Werkstoff versehen ist.

FIG.1

## Einen LWL koaxial aufnehmender Steckerstift und Verfahren zu seiner Herstellung

Die Erfindung bezieht sich auf einen LWL koaxial aufnehmenden Steckerstift, welcher aus einem harten Grundmaterial mit niedrigem thermischen Ausdehnungskoeffizienten besteht.

Derartige Steckerstifte sind beispielsweise durch die DE-A 34 36 634 bekannt.

Höchste Anforderungen an die Genauigkeit der Oberflächengüte eines Steckerstifts und an die Koaxialität seiner Mantelfläche zur optischen Achse eines eingebrachten LWL sind insbesondere bei Steckverbindungen für Monomode-LWL erforderlich. Dabei sollen Toleranzabweichungen von 100 nm nicht überschritten werden.

Steckerstifte müssen in einem weiten Temperaturbereich klemmfrei mit geringem Spiel in eine zugeordnete Steckerhülse einführbar sein. Diese Forderungen können nur mit Materialien erfüllt werden, welche einen sehr geringen thermischen Ausdehnungskoeffizienten aufweisen wie Keramik oder Hartmetall. Dabei ist anzustreben, für den Steckerstift den gleichen Werkstoff wie für die Steckerhülse zu wählen.

Leider sind Materialien, die einen geeigneten niedrigen thermischen Ausdehnungskoeffizienten aufweisen, sehr hart und schwer spanabhebend bearbeitbar.

Mit einer optischen Drehbank (vgl. DE-A 29 38 910) kann eine genaue koaxiale Ausrichtung der Mantelfläche eines Steckerstiftes zur optischen Achse seines LWL durch spanabhebende Nachbearbeitung erreicht werden. Allerdings ist dieses Präzisionsverfahren nur für weiche Materialien wie Neusilber oder Kupfer geeignet, welche einen sehr hohen thermischen Ausdehnungskoeffizienten aufweisen oder auch zur Korrosion neigen.

Der Erfindung liegt deshalb die Aufgabe zugrunde, einen Steckerstift der eingangs genannten Art derart zu gestalten, daß trotz Verwendung eines harten Werkstoffes mit kleinem thermischen Ausdehnungskoeffizienten eine problemlose spanabhebende Nachbearbeitung seiner Mantelfläche möglich ist.

Die Lösung gelingt dadurch, daß die äußere Mantelfläche des Steckerstiftes zumindest auf einer Teillänge mit einer Beschichtung einer Dicke von weniger als 300 um, insbesondere weniger als 150 um, aus einem besser als das Grundmaterial spanabhebend bearbeitbaren Werkstoff versehen ist.

Grundkörper aus einem Material mit einem geeigneten niedrigen thermischen Ausdehnungskoeffizienten werden im Bereich, mit welchem sie in eine Steckerhülse einzuführen sind, mit einem geringen Untermaß gefertigt und anschließend mit einem gut zu bearbeitenden Material beschichtet. Die Beschichtung erfolgt zunächst mit einem Übermaß, so daß nach dem Einbringen des Lichtwellenleiters durch spanabhebende Bearbeitung das gewünschte Sollmaß hergestellt werden kann. Die Beschichtungen können durch verschiedene Abscheideverfahren wie z.B. galvanisches Abscheiden, chemisches Abscheiden, Flammspritzen, Sputtern, Bedampfen, oder CVD-ähnliche Verfahren (reaktive Abscheidung aus der Gasphase) aufgebracht werden.

Bevorzugt wird eine galvanische Beschichtung mit Nickel. Dabei zeigte sich, daß durch Abscheiden aufgebrachte dünne Schichten wie insbesondere Nickelschichten für Steckerstifte bessere Eigenschaften aufweisen können, als aus gleichem Material bestehende massive Körper. Eine thermische Nachbehandlung kann diesbezüglich vorteilhaft sein.

Die Beschichtungen haften im gesamten Lager- und Betriebstemperaturbereich von etwa -50 $^\circ$C bis +100 $^\circ$C sehr gut. Die thermische Ausdehnung des Steckerstiftes wird praktisch nur vom Grundmaterial bestimmt, da die Beschichtungen hinsichtlich der thermischen Ausdehnung praktisch vernachlässigbar dünn sind. Bei der Herstellung der Grundkörper ist keine hohe mechanische Präzision erforderlich. Die Beschichtung wird beim Abscheideverfahren mit gleichmäßiger Dicke allseitig auf den Grundkörper aufgebracht. Die Schichtdicken lassen sich in weiten Grenzen von einigen nm bis einigen 100 um einstellen.

Die Beschichtung kann für eine erhebliche Menge von Grundkörpern gleichzeitig durchgeführt werden, so daß erfindungsgemäß aufgebaute Steckerstifte hervorragend für eine große Serienfertigung geeignet sind.

Bei einer vorteilhaften Ausführungsvariante ist vorgesehen, daß der aus einem harten Grundmaterial bestehende Grundkörper des Steckerstiftes zwei Längenbereiche mit unterschiedlichem Durchmesser aufweist, daß auf beiden Längenbereichen eine erste Beschichtung aufgebracht ist, und daß auf dem vorzugsweise vorderen Längenbereich, welcher einen geringeren Durchmesser aufweist, eine zusätzliche zweite Beschichtung aufgebracht ist.

Die Erstbeschichtung kann z.B. in Form einer möglichst dünnen CU-Schicht (einige um dick) ausgeführt sein. Diese CU-Schicht kann auf der gesamten Oberfläche des Grundkörpers aufgebracht sein und eine Korrosionsschutzschicht für einen nicht korrosionsfesten Grundkörper bilden. Weiterhin kann diese Cu-Schicht die Haftung einer darüberliegenden dickeren Nickel-Schicht deutlich verbessern.

Ein vorteilhaftes Verfahren zur Herstellung eines erfindungsgemäßen Steckerstifts ist dadurch gekennzeichnet, daß der Steckerstift aus einem harten Grundkörper hergestellt wird, dessen Außendurchmesser gegenüber dem Solldurchmesser des Steckerstifts ein geringes Untermaß von weniger als 300 um aufweist, und daß danach mindestens eine Schicht aus einem besser bearbeitbaren Werkstoff aufgebracht wird, deren Dicke größer als das halbe Untermaß ist, und daß schließlich der Solldurchmesser durch spanabhebende Bearbeitung hergestellt wird. Dabei erfolgt vorzugsweise die spanabhebende Bearbeitung mittels einer sogenannten optischen Drehbank, bei welcher die Drehachse des Steckerstifts zur optischen Achse des eingefügten LWL ausgerichtet wird, so daß die Mantelfläche sehr genau koaxial zur optischen Achse des LWL bearbeitet werden kann.

Die Erfindung wird anhand der Beschreibung von in der Zeichnung dargestellten Ausführungsbeispielen näher erläutert.

Fig. 1 zeigt einen Längsschnitt durch eine erste Ausführungsform eines erfindungsgemäßen Steckerstifts.

Fig. 2 zeigt einen Längsschnitt durch eine zweite Ausführungsform eines erfindungsgemäßen Steckerstifts.

Die in den Figuren dargestellten Steckerstifte sollen in den engen kapillaren Bohrungen 2 des Grundkörpers 1 bzw. 5 einen nicht dargestellten LWL aufnehmen. Vorzugsweise wird ein LWL eingeklebt. Dabei kann der betreffende Bereich des LWL zusätzlich auch mit einem dünnen Hüllrohr, beispielsweise mit einer Glaskapillare, versehen sein.

Die Außendurchmesser der Grundkörper 1 bzw. 5 sind geringer als der Solldurchmesser des Steckerstifts, welcher beispielsweise 3,5 mm betragen soll.

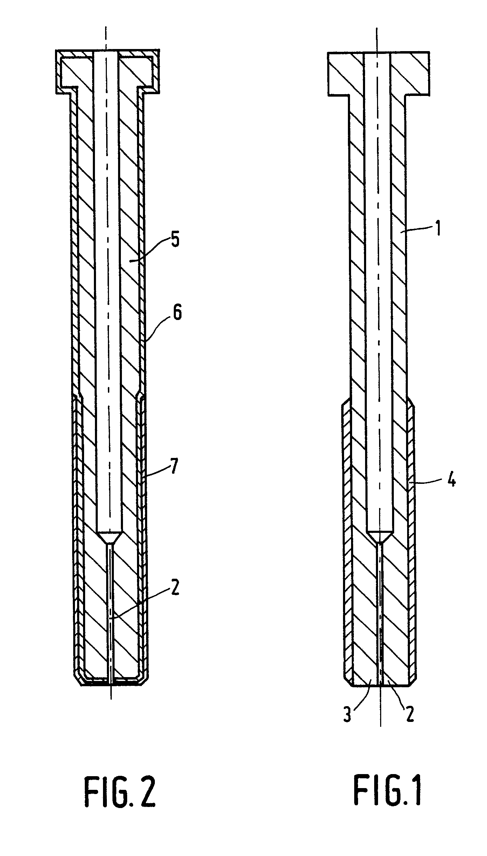

Bei der Ausführung nach Fig. 1 wird der Solldurchmesser durch die galvanisch aufgebrachte Nickelschicht 4 erreicht, welche übertrieben dick gezeichnet ist. Tatsächlich weist sie eine Schichtdicke von nur etwa 50 um bis 100 um auf.

In Fig. 2 ist die gesamte Oberfläche des Grundkörpers 5 mit einer ersten vorzugsweise sehr dünnen Beschichtung 6 versehen. Nur im vorderen Bereich, in welchem der Grundkörper 5 mit verringertem Durchmesser hergestellt wurde, ist eine zweite Beschichtung 7 aufgebracht. Die erste Schicht wirkt vorzugsweise auch als Korrosionsschutzschicht und kann eine Haftvermittlungsschicht (z.B. Kupfer) für die folgende zweite Schicht 7 aus Nickel sein.

Zunächst wird ein Grundkörper 1 bzw. 5 mit Untermaß hergestellt. Danach werden Schichten 4 bzw. 6 und 7 mit einer solchen Dicke abgeschieden, daß ein Übermaß gegenüber dem Sollmaß des Steckerstiftes entsteht. Dann wird der Endbereich eines LWL in die kapillare Bohrung 2 eingeklebt und bündig zur Stirnfläche 3 geschliffen. Schließlich wird mittels einer sogenannten optischen Drehbank (DE-A 29 38 910) das Sollmaß des Außendurchmessers des Steckerstifts durch Nachbearbeitung hergestellt, wobei dann die Außenmantelfläche zumindest im vorderen Bereich sehr genau koaxial zur optischen Achse des LWL verläuft.

Für die Grundkörper 1 bzw. 5 wurden Rohlinge aus einem Wolfram-Verbundwerkstoff verwendet, welcher einen thermischen Ausdehnungskoeffizienten von $6 . 10^{-6}$ $K^{-1}$ hat. Der Außendurchmesser betrug im als Steckerstift wirkende Bereich etwa 2,4 mm. Anschließend wurde galvanisch eine Nikkelschicht von 100 um aufgetragen. Das galvanisch abgeschiedene Nickel zeigte eine Gefügestruktur, die sich besonders vorteilhaft bearbeiten ließ. Erreicht wurden bei der darauffolgenden Bearbeitung Rundheitswerte von besser als 0,1 um und Oberflächenrauhigkeiten von ebenfalls weniger als 0,1 um. Die Bearbeitung mittels einer optischen Drehbank ergab hervorragende Werte für die zentrische Koaxialität der optischen Achse des LWL und der Mantelfläche des Steckerstifts.

Die erfindungsgemäßen Steckerstifte zeigten insbesondere in Verbindung mit einem Bearbeitungsverfahren mit Hilfe der optischen Drehbank hervorragende Eigenschaften. Die optischen Dämpfungen von mit erfindungsgemäßen Steckerstiften hergestellten Steckverbindungen waren extrem klein.

## Ansprüche

1. Einen LWL koaxial aufnehmender Steckerstift, welcher aus einem harten Grundmaterial mit niedrigem thermischen Ausdehnungskoeffizienten besteht,
dadurch gekennzeichnet, daß seine äußere Mantelfläche zumindest auf einer Teillänge mit einer Beschichtung (4,6,7) einer Dicke von weniger als 300 um, insbesondere weniger als 150 um, aus einem besser als das Grundmaterial spanabhebend bearbeitbaren Werkstoff versehen ist.

2. Steckerstift nach Anspruch 1,
dadurch gekennzeichnet, daß das Grundmaterial mit Nickel beschichtet ist.

3. Steckerstift nach Anspruch 2,
dadurch gekennzeichnet, daß die Nickelschicht galvanisch aufgebracht ist.

4. Steckerstift nach einem der Ansprüche 1 bis 3,
dadurch gekennzeichnet, daß der aus einem harten Grundmaterial bestehende Grundkörper (5) des Steckerstifts zwei Längenbereiche mit unterschiedlichem Durchmesser aufweist, daß auf beiden Längenbereichen eine erste Beschichtung (6) aufgebracht ist, und daß auf dem vorzugsweise vorderen Längenbereich, welcher einen geringeren Durchmesser aufweist, eine zusätzliche zweite Beschichtung (7) aufgebracht ist.

5. Steckerstift nach Anspruch 4, dadurch gekennzeichnet, daß die Beschichtungen (6,7) aus unterschiedlichen Materialien bestehen.

6. Verfahren zur Herstellung eines einen LWL aufnehmenden zylindrischen Steckerstifts, in dessen koaxiale Bohrung ein LWL eingefügt wird, wonach der Steckerstift in einer optischen Drehbank in einer zur optischen Achse des LWL ausgerichteten Drehachse eingespannt wird, wonach die Mantelfläche des Steckerstifts spanabhebend zentrisch zur optischen Achse des LWL bearbeitet wird, dadurch gekennzeichnet, daß der Steckerstift aus einem harten Grundkörper (1,5) hergestellt wird, dessen Außendurchmesser gegenüber dem Solldurchmesser des Steckerstifts ein geringes Untermaß von weniger als 300 um aufweist, und daß danach mindestens eine Schicht (4,6,7) aus einem besser bearbeitbaren Werkstoff aufgebracht wird, deren Dicke größer als das halbe Untermaß ist, und daß schließlich der Solldurchmesser durch spanabhebende Bearbeitung hergestellt wird.

FIG.2

FIG.1